# EUROPEAN PATENT APPLICATION

(11) **EP 2 233 210 A1**
(43) Date of publication of application: **29.09.2010**
(21) Application number: 09155928.6
(22) Date of filing: 23.03.2009
(51) Int. Cl.: B01L 3/00, G01N 35/10

(54) **Device for sequentially dispensing liquid reagents to a reaction chamber**

(71) Applicant: Aleria Biodevices, S. L., 08028 Barcelona (ES)
(72) Inventor: Claverol Tinturé, Enric, 08028, Barcelona (ES)
(74) Representative: ZBM Patents

(57) **Abstract**

A container for liquid reagents comprises a tubular body (1), an actuator (3) for increasing pressure inside said tubular body and acting through a first end thereof, an outlet (2) provided in the tubular body at a certain longitudinal position relative to said first end, a plurality of partitions (4, 5, 6) located between the first end and said outlet, slidably arranged within the tubular body and sealingly engaged to the inner walls thereof, a first compartment defined between two of said partitions and filled with a liquid reagent, a second compartment defined either between two partitions or between a partition and the actuator, and filled with a liquid reagent, so that, upon the actuation of the actuator, the compartments and the liquids therein are moved inside the tubular body towards the outlet and they successively come to comprise said outlet, whereby the liquid reagents can be sequentially released through the outlet.

## Description

The present invention relates to a container for liquid reagents comprising a tubular body and an actuator for increasing pressure inside said tubular body, the actuator acting through a first end of the tubular body. It also relates to a container further comprising an outlet provided in the tubular body at a certain longitudinal position relative to said first end.

The invention further relates to a method of manufacturing an apparatus comprising two of said containers and a reaction chamber interposed between them.

The invention supports automation of complex assays, for example immunoassays, for point-of-care and laboratory use.

### BACKGROUND ART

Heterogeneous assays within clinical diagnostic environments or research labs involve all or some of the following activities performed at well defined points in time; release of reagents from containers into reaction chambers (e.g. micro-titer plates), incubation periods and washes.

Important examples are the ELISA tests (Enzyme-Linked ImmunoSorbent Assays). An ELISA test supports the quantification of an analyte (e.g. antigen, antigen binding compound, antibody, toxin, etc.) in liquid media (e.g. serum, urine, water, etc). Its exquisite sensitivity (often down to pg/ml), especially when a chemiluminescent variant is employed, makes it the gold standard in many fields. ELISA tests are used in multiple applications such as diagnostic of allergies (human and veterinary) and AIDS, water control, biomedical research, etc.

By "antigen binding compound" it is meant any compound that can specifically bind to an antigenic protein, such as antibodies or aptamers. An "antibody" can be a whole antibody, including without limitation a chimeric, humanised, recombinant, transgenic, grafted and single chain antibody, and the like, or any fusion protein, conjugates, fragments, or derivates thereof that contain one or more domains that selectively bind to the desired antigen. Antibody thereby includes a whole immunoglobulin molecule, a polyclonal antibody, a monoclonal antibody, a chimeric antibody, a humanized antibody, or an immunologically effective fragment of any of these. An antibody fragment means an Fv, a disulfide linked Fv, scFv, Fab, Fab', or F(ab')2 fragment, which are well known in the art.

"Analyte" is a generic term for referring to any involved detectable substance or compound, such as an allergenic extract, an antigen, an antigen binding compound, an antibody, a toxin, etc.

The execution of a typical sandwich ELISA test involves the pipetting of a sample into a pre-coated reaction chamber, subsequent wash, pipetting of conjugated antibody, followed by a new wash and addition of enzymatic substrate. The enzymatic reaction is usually arrested by a stop solution.

In R&D environments these immunoassays are usually performed manually, using multi-tip pipettes, since the number of samples to analyze is typically small. The process is technically simple but tedious and time consuming.

When the number of samples justifies the investment, a pipetting robot can be used which automates the pipetting process. The cost of the average pipetting robot is in excess of 20.000 euros. Screening projects or medium to large size testing laboratories decide in favor of such an automation solution.

Currently, users of multi-step (heterogeneous) assays applied to low numbers of samples often resort to manual pipetting.

One approach to achieve automation, but involving miniaturization, is lab-on-a-chip technology. In this case the assays are not performed in conventional micro-titer plates but in micro-fluidic structures including microchannels and microchambers and requiring volumes of sample and reagents in the nanolitre scale. The detection of the antigen-antibody complex can be performed by conventional optical means with integrated sensors (chromogenic, fluorescent or chemiluminescent) or electrically (e.g. amperometrically).

Critical for automated and portable assays in the microlitre-millilitre range (e.g. using conventional microtiter plates) and to miniaturized alternatives (e.g. lab-on-a-chip) is the need for storage of reagents, and their use at known volumes following a specific temporal sequence.

### SUMMARY OF THE INVENTION

It is an object of the present invention to provide a simple and accurate system of sequentially dispensing the multiple reagents required for a multi-step assay that supports their automated release at known volumes and specific points in time.

According to a first aspect of the invention, one container comprises the mentioned outlet and a plurality of partitions located between its first end and said outlet, slidably arranged within the tubular body and sealingly engaged to the inner walls thereof, a first compartment defined between two of said partitions and filled with a liquid reagent, a second compartment defined either between two partitions or between a partition and the actuator, and filled with a liquid reagent, so that, upon an actuation of the actuator, the first compartment and the liquid therein are moved inside the tubular body towards the outlet and the first compartment can reach a longitudinal position in which it comprises said outlet, whereby the liquid in the first compartment can be released through the outlet, and subsequently, upon a further actuation of the actuator, the second compartment can also come to comprise said outlet, whereby the liquid in the second compartment can also be released through the outlet. In general, upon the actuation of the actuator, the compartments and the liquids therein are moved inside the tubular body towards the outlet and they successively come to comprise said outlet, whereby the liquid reagents can be sequentially released through the outlet.

The container preferably comprises an inlet provided on the body at the same longitudinal region than the outlet (i.e. at approximately the same longitudinal position than the outlet), an additional partition slidably arranged within the body and sealingly engaged to the inner walls thereof, defining an additional compartment between any other partition and itself, said additional compartment having no liquid reagent therein before the actuation of the actuator, so that the additional compartment can eventually reach a longitudinal position in which it comes to comprise both said inlet and said outlet, whereby an additional liquid reagent can be injected into the additional compartment through the inlet and then ejected through the outlet, either before or after the release of any other liquid reagent, depending on the longitudinal position of the additional partition. The ejection is effected in the same operation than the injection by virtue of the pressure thereof, and can be finished by injecting air after having injected the entire additional reagent.

Advantageously, said inlet is longitudinally farther from said first end than the outlet, so that, when a subsequent compartment is moved to comprise the outlet, the farthest partition of said compartment covers the inlet, thereby preventing the release of reagent through said inlet.

In an embodiment, the container further comprises an additional actuator acting through a second end of the tubular body.

In an embodiment, the container comprises a hole on the tubular body and a piece of a substrate provided with an analyte on a surface thereof, such that said piece of substrate is sealingly engaged to said orifice with said surface becoming an inner surface of the tubular body (i.e. facing the inside thereof), whereby at least two of said compartments defined in the tubular body can act as a reaction chamber when they reach and come to comprise said piece of substrate.

In an embodiment, the container comprises a duct extending from its outlet and a vent provided on such duct, said vent comprising at least one orifice provided on the duct and a hydrophobic sleeve arranged in the duct covering said at least one orifice. The downstream end of the hydrophobic sleeve can be narrower than its upstream end, the latter being nearer the outlet of the container. The downstream end of the hydrophobic sleeve can also be covered with a hydrophilic membrane. Said degassing vent prevents air from entering the reaction chamber.

According to a second aspect of the invention, the container comprises a plurality of partitions located between the first end and a second end of the tubular body, slidably arranged within the tubular body and sealingly engaged to the inner walls thereof, a first compartment defined between two of said partitions and filled with a first liquid reagent, a second compartment defined either between two partitions or between a partition and the actuator, and filled with a second liquid reagent, a hole provided on he tubular body, a piece of a substrate provided with an analyte on a surface thereof and being sealingly engaged to said hole with said surface becoming an inner surface of the tubular body, so that, upon an actuation of the actuator, the first compartment and the first liquid reagent are moved inside the tubular body towards the second end thereof and the first compartment can reach a longitudinal position in which it comprises said piece of substrate, whereby the first compartment can act as a reaction chamber, and subsequently, upon a further actuation of the actuator, the second compartment can also come to comprise said piece of substrate, whereby the second compartment (and the subsequent compartments too) can also act as a reaction chamber. After finishing the assay, the container and the liquid products left therein can be disposed of.

A container according to the invention may be a part of a device further comprising a reaction chamber connected to said container through said duct. Said device can also comprise a waste chamber for receiving excess liquid reagent, the waste chamber comprising at least one vent for evacuating air.

Such a container may also be a part of an apparatus further comprising a linear or curvilinear reaction chamber.

In an embodiment, said apparatus also comprises a passageway between the outlet of one container and the outlet of the other container, such that the reaction chamber is interposed in said passageway between said two outlets.

Preferably, the reaction chamber has a serpentine configuration, and some spots of an analyte are linearly and sequentially distributed in the serpentine reaction chamber. The serpentine geometry makes a long reaction chamber compact.

In an embodiment, the apparatus comprises an optical device for imaging the interior of the reaction chamber, or an electrical sensor for electrochemical detection in the reaction chamber.

According to a third aspect of the invention, a method of manufacturing said apparatus comprises the step of spotting a substrate with an analyte by overlaying a frame provided with a plurality of holes on said substrate and filling, to a certain height, the wells formed by said holes with a solution comprising the analyte.

It is known to those skilled in the art that immunochromatographic rapid tests in which the sample is displaced along multiple regions of a membrane by capillarity is a qualitative assay prone to false positives and negatives. The present invention provides an alternative for the release of reagents, when compared to capillarity-based rapid tests capable of supporting full immunoassays, with the aid of a portable reader or integrated optical or electrochemical sensor.

### BRIEF DESCRIPTION OF THE DRAWINGS

Some embodiments of the present invention will be described in the following, only by way of non-limiting example, with reference to the appended drawings, in which:
figures 1A, 1B, 1C and 1D are schematic representations of a container comprising multiple liquid reagents;
figure 2 shows a magnified variation of a detail of figure 1, specifically of the outlet 2;
figures 3A and 3B show the container of figure 1 connected to a reaction chamber;
figures 4A, 4B, 4C and 4D show the container of figure 1 with a built-in reaction chamber;
figures 5A, 5B and 5C show a variation of the container of figure 4;
figures 6A, 6B, 6C and 6D show a variation of the container of figure 1; figures 7A, 7B, 7C and 7D show a variation of the container of figure 6;
figure 8 shows the container of figure 6 connected to a reaction chamber; figure 9 shows two containers according to figure 6 or 7 connected to each other;
figure 10 shows the container of figure 6 with additional elements;
figure 11 shows the container of figure 10 connected to a reaction chamber and to another container; and
figures 12, 13 and 14 show a degassing vent in a duct.

### DESCRIPTION OF PARTICULAR EMBODIMENTS

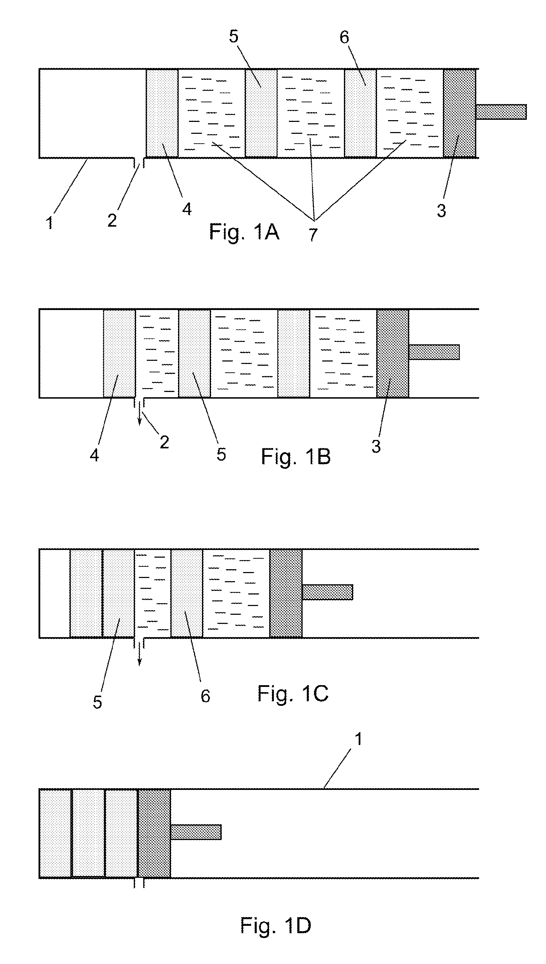

Figure 1A shows a container comprising a tubular body 1, an outlet 2 provided on a wall of the body 1, a plurality of partitions 4, 5, 6 spaced within the body 1 and a plunger or actuator 3 closing up a first end of the tubular body 1. The partitions and the actuator can slide inside the tubular body and sealingly engage the inner wall or walls thereof. Although the size of the container depends on the assay, a container approximately 80 mm long and 8 mm wide would not be unusual.

A plurality of compartments 7 are defined between any two adjacent partitions (by said two partitions and the inner wall or walls of the body 1), and between the actuator 3 and the partition 6 adjacent thereto. Each compartment is filled with a liquid reagent. In the initial state of the container, all the partitions and compartments are located between the outlet 2 and the actuator 3.

The actuator 3 is driven by any suitable driving means, for example an electrical motor, not shown. In use (figure 1 B), the driving means controlledly drives the actuator 3 into the body 1, whereby the partitions and the liquid reagents are displaced towards the outlet 2. Incompressibility of liquids ensures the simultaneous displacement of all the components within the body, until the first compartment (that farthest from the actuator 3, defined between partitions 4 and 5) comes to comprise the outlet 2 (i.e. is situated over the outlet, see figure 1 B).

When said first compartment is over the outlet 2, the liquid reagent in the first compartment is released through the outlet towards a reaction chamber (not shown) or an analogous element. Release ends when the corresponding partition 5 covers the outlet.

As the need arises for release of another liquid reagent, the actuator resumes displacement driven by the driving means. Figure 1C shows the release of the liquid reagent of a subsequent compartment (this one defined between partitions 5 and 6). These steps are repeated until all reagents are released; figure 1D shows the partitions and the actuator stacked at (or near) the other end of the body 1, after all the liquid reagents have been released.

This in-line storage scheme allows shipment and storage at room temperature or under refrigeration of pre-aliquoted liquid reagents ("pre-aliquoted" means that the liquid has definite volume and reagent concentration) until the use of said liquid reagents, since adequate seal of the partitions against the inner walls of the body 1 precludes evaporation at room temperature, and cold temperatures do not affect the sealing of the partitions.

The in-line arrangement simplifies automated reagent release with a given predetermined temporal sequence avoiding the need for robot pipettors.

In one embodiment of the invention, capacitive, magnetic or other sensors (not shown) are positioned outside the body of the container to detect the presence (position) of a partition under the sensor (the partitions may include metallic or magnetic parts so that sensing of partitions by capacitive, magnetic or other means is facilitated), thus signaling the end of the release and the arrest of the displacement to the driving means (which may be computer-controlled), which hence need not be of high accuracy. At this point a pause for incubation or other purpose can be implemented.

In one embodiment of the invention a rubber partition is enhanced with a metallic, magnetic, fluorescent, or dielectric piece so that it generates a measurable signal as it is displaced during reagent release in the proximity of the sensors.

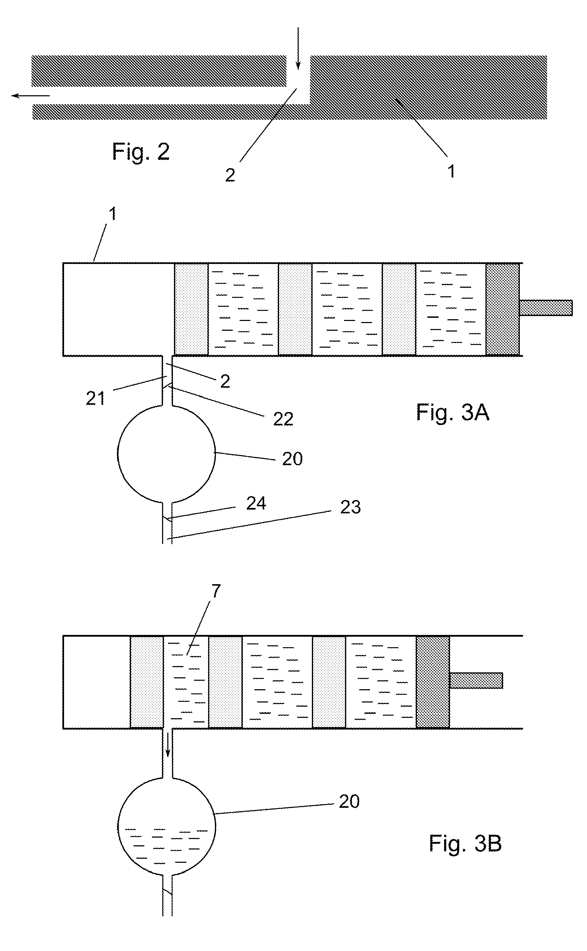

Figure 2 shows a variation of the outlet 2 of figure 1; a longitudinal channel is represented embedded in a wall of the body 1 extending the outlet 2. This channel can be a microchannel and can be produced by irreversibly sealing two or more pieces of an elastomeric polymer (i.e. PDMS) with embedded micro-fluidics in the walls of the body 1. Irreversible bonding of the PDMS pieces can be aided by UV or plasma treatment. Said longitudinal channel can instead be provided in a sleeve which would be placed on the tubular body 1 engaging the outlet 2.

Figure 3A shows a reaction chamber 20 attached to the outlet 2 in the body 1 of the container of figure 1. The reaction chamber 20 comprises an inlet 21 from the container and an outlet 23 to a waste chamber or an analogous element (not shown). In order to avoid rundown due to leakage through the outlet 23, a pressure activated disposable mini-valve 24, for example produced using silicone technology, is included in the outlet 23.

Only during ejection of reagents or samples through the outlet 2 of the container and into the reaction chamber 20, the exit valve 24 opens due to increased intra-chamber pressure, allowing a continuous flow from inlet 21 to outlet 23. An additional pressure activated valve 22 can be included in the inlet 21 of the reaction chamber to avoid backflow after disconnection from the container (should disconnection be needed).

Figure 3B shows the embodiment of figure 3A but with the reaction chamber 20 being filled with the liquid reagent of compartment 7 as it is released through the outlet 2 of the container.

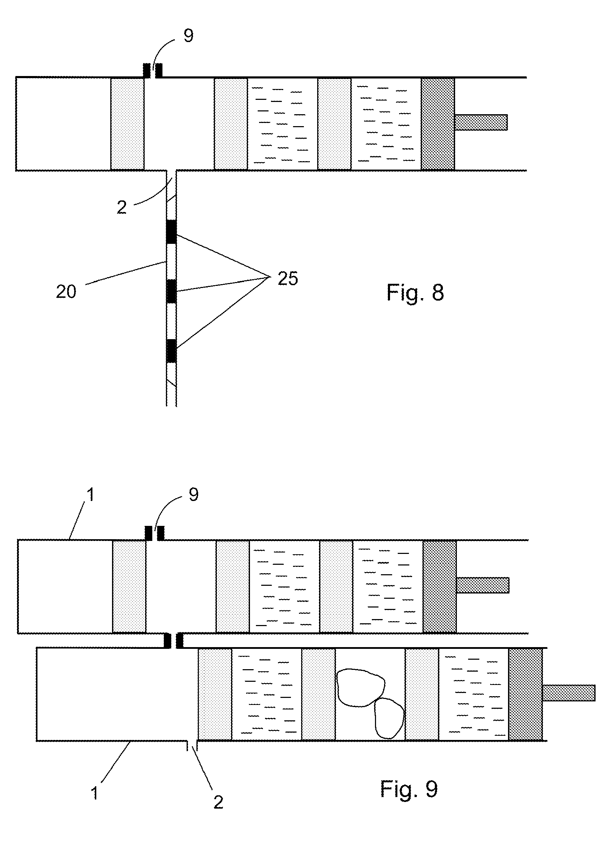

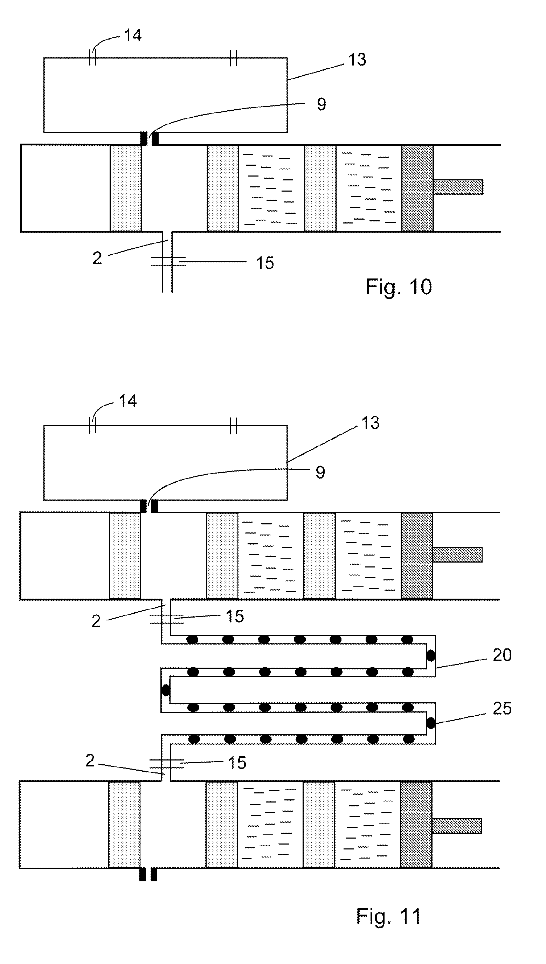

The reaction chamber 20 can be surrounded by the necessary optical detection systems (not shown) to complete a chromogenic, fluorescent or chemiluminescent assay, or one or more sensors can be included for electrochemical sensing. Furthermore, reaction chambers with any geometries can be envisaged (see figures 8 and 11). These include chambers compatible with conventional readers so that the reaction chamber can be disconnected from the container and optical readouts can be performed with off-the-shelf instruments.

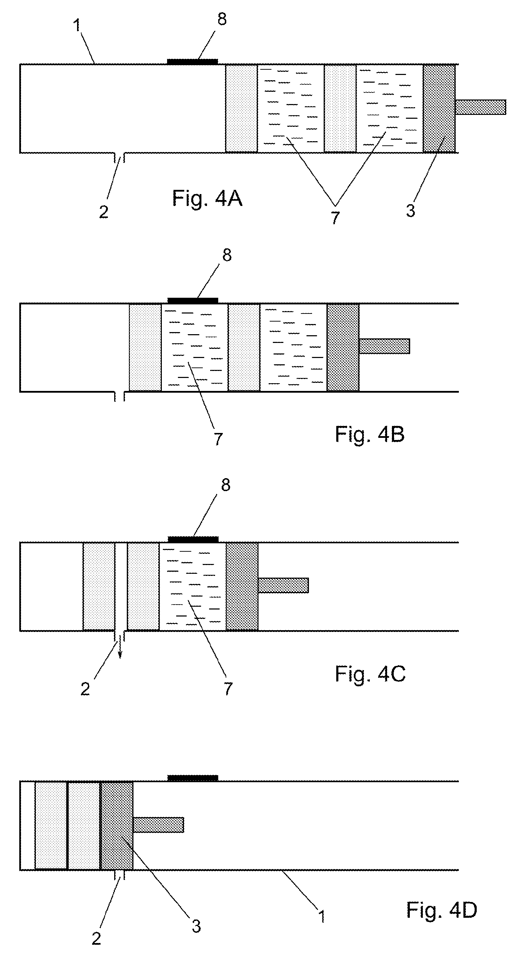

Figure 4A shows a container similar to that of figure 1 but provided with a hole on the tubular body 1 and a piece of a substrate 8 pre-coated with one or more analytes on a surface thereof, such that said substrate 8 is sealingly engaged to said orifice and said surface faces the inside of the body 1. In this way, the compartments 7 defined in the body 1 can act as a reaction chamber when they reach and come to comprise said substrate 8 (as shown in figures 4B and 4C). The substrate 8 can also include one or more electrodes for electrochemical sensing.

The waste liquid is evacuated through the outlet 2 at an appropriate time. Said outlet is farther from the actuator 3 than the reaction chamber formed by the compartments 7 when acting as such. Figure 4D shows the partitions and the actuator stacked after the outlet 2 at the end of the process.

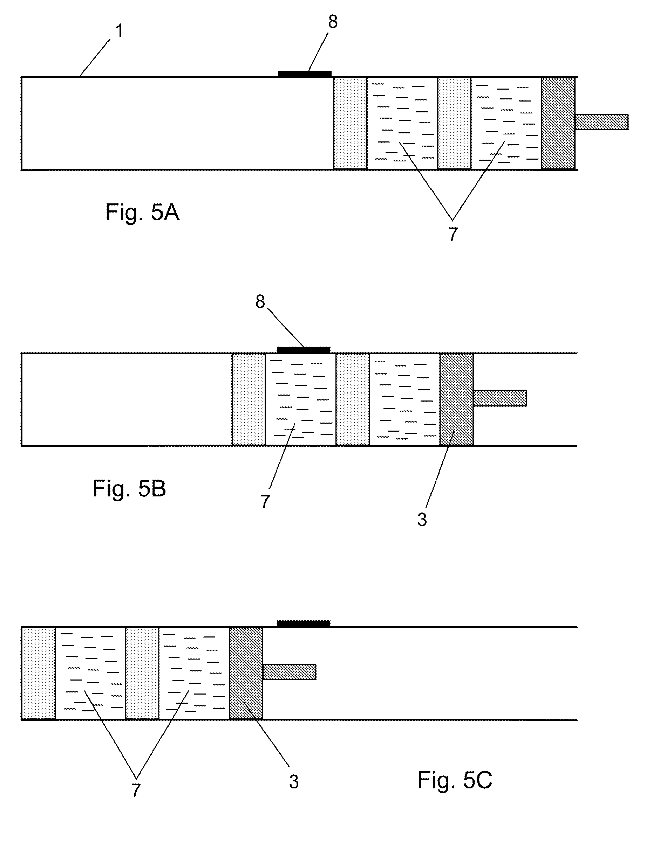

Figure 5A shows a container similar to that of figure 4 but having no outlet 2. As shown in figure 5B, the compartments 7 also act successively as a reaction chamber and, as shown in figure 5C, the compartments 7 are stacked at the other end of the body 1 at the end of the process; the container can the be disposed of.

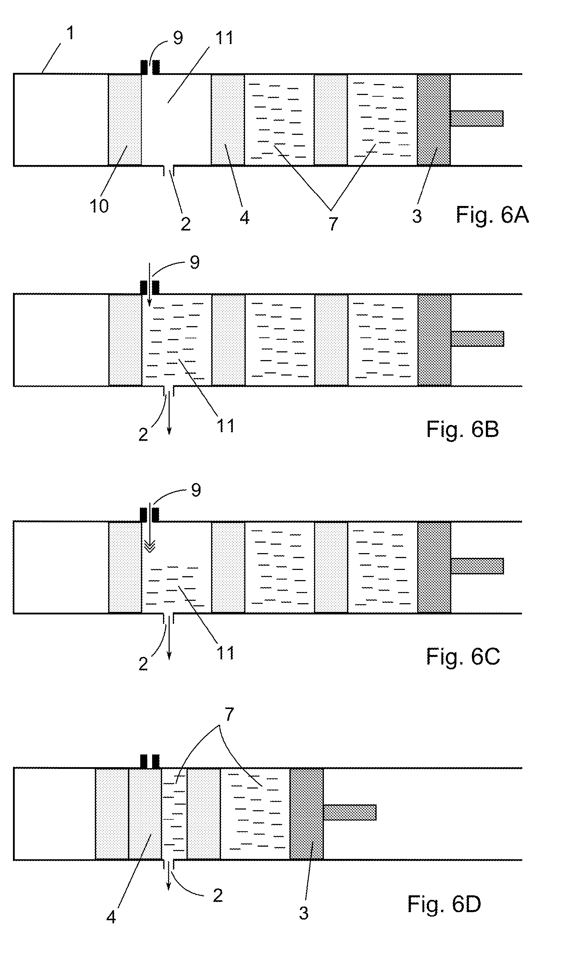

The container of figure 6A is similar to that of figure 1 but it is provided with an inlet 9 on a wall of the tubular body 1, at about the same annular region than the outlet 2. In the initial state of the container, a partition 10 is placed beyond the outlet 2 and the inlet 9, i.e. farther from the actuator 3 than the outlet and the inlet; a partition 4 adjacent to the partition 10 is initially placed nearer to the actuator 3 than both the inlet 9 and the outlet 2. A compartment 11 is defined between partitions 4 and 10; said compartment 11 comprises both the outlet 2 and the inlet 9 and has initially no liquid reagent therein.

Before the driving means start to drive the actuator 3, an additional liquid, for example a sample or reagent, is injected (e.g. by means of a syringe) into the compartment 11 through inlet 9 (figure 6B) and is immediately ejected through outlet 2 under the pressure built by the injection itself in compartment 11. After injecting the entire additional liquid, the ejection of the liquid remaining in compartment 11 can be helped by injecting air into compartment 11 (see figure 6C).

Subsequently, upon actuation of the actuator 3, the pre-filled compartments 7 sequentially release their respective liquid reagents, just as in the container of figure 1 (see figure 6D).

The inlet 9 is preferably slightly beyond the outlet 2, such that, once a subsequent compartment 7 reaches the outlet 2, the farthest partition of such a compartment (for example the partition 4 in figure 6D) covers the inlet 9 and reagents in partitions 7 are prevented from flowing out through inlet 9, thus ensuring said reagents to flow out only through outlet 2.

The configuration of figure 6 is useful in those applications in which a sample, or generally any additional reagent, not present in the container needs to be injected into the reaction chamber (for example in immunoassays). The sample or reagent can be injected through inlet 9 by, for example, connecting a conventional syringe at said inlet with or without a filter. This embodiment is also useful for cases in which the additional reagent has to be stored at different environmental conditions than the reagents of the container.

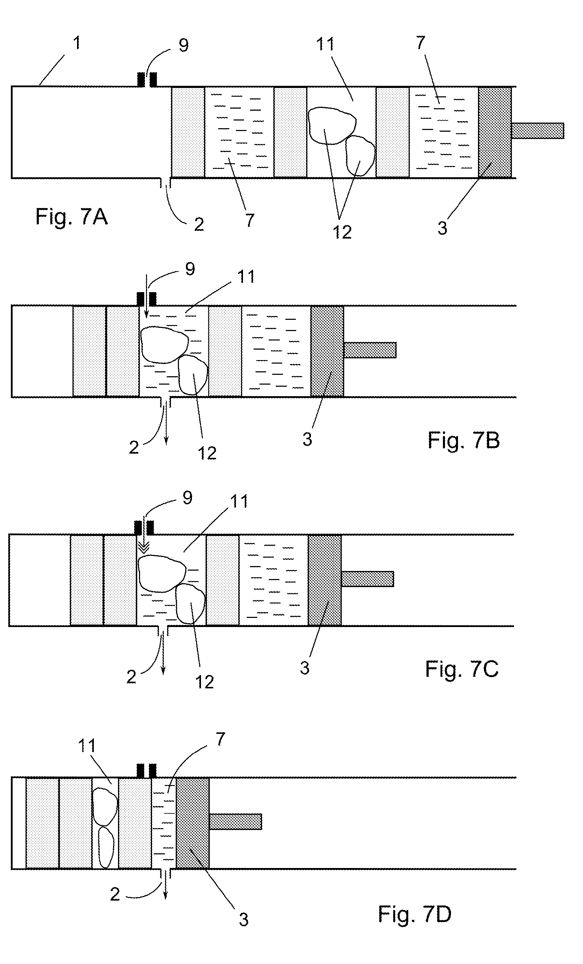

The container of figure 7A is similar to that of figure 6 but in the former the compartment 11 is defined among the pre-filled compartments 7, not beyond them. This allows a sample or reagent not initially contained in the container to be ejected through the outlet 2 at any point in time during the assay, not necessarily prior to the release of the first pre-filled liquid reagent. The compartment 11 is left unfilled with reagent but is provided with a spacer 12 for keeping a volume therein; such a spacer may comprise solid beads of glass, polystyrene, etc, as spacers.

When its turn arrives the compartment 11 is placed by the actuator 3 such that it comes to comprise both the outlet 2 and the inlet 9. Figure 7B shows the compartment 11 being injected the additional sample or reagent through the inlet 9 and said additional liquid being immediately ejected by virtue of the pressure generated by the injection itself. Figure 7C represents the case in which air is subsequently injected to help eject the additional liquid remaining in compartment 11. Figure 7D shows the liquid reagent pre-filled in a further compartment 7 being released through the outlet 2.

One advantage of feeding the reaction chamber with additional samples or reagents injected through the inlet 9 as opposed to using a second access directly into the reaction chamber becomes clear in evaluating flow-assays in which sealed reaction chambers are used. In this case it is convenient to use only one inlet and one outlet in the reaction chamber, for example to avoid dead volumes during washes, as required for immunoassays. Thorough washes are important to achieve high sensitivity in immunoassays and complex multi-inlet chambers are prone to washing problems.

Figure 8 shows the container of figure 6 but provided with an elongate reaction chamber 20 attached to the outlet 2. Said reaction chamber is pre-filled and incubated with one or more antibodies, antigens or any analytes 25 separated by air gaps. After incubation, the reaction chamber can be purged with a wash solution, blocked using means well known to experts in the field and attached to the container. This assembly is suitable for example for solid-phase immunoassays. The absence of dead volumes in this type of chamber facilitates wash and increases sensitivity.

With the addition of a reaction chamber 20 (see figures 3 and 8), the container of the invention supports complete assays, for example but not necessarily of the immunoassay subtype, in an automated fashion and compact format and requiring only a single linear actuator 3 for control of the assay.

One embodiment of the container comprises multiple outlets 2 to enforce release of different reagent subsets via different outlets. Another embodiment likewise comprises multiple inlets 9.

Multiple containers according to the present invention can be arranged in an array fashion and mounted on microtiter plates for release of reagents for multi-well assays.

Figure 9 shows two containers according to figure 6 or 7 connected to each other by attaching the outlet of one container to the inlet of another container. This allows to separate reagents that should not contact each other; such an unwanted contact can happen within one single container when small traces of a reagent remain attached to the inner walls of the body 1, whereby a subsequent reagent moving inside said body may contact the previous reagent. The configuration of figure 9 also allows the user to manually prepare one container "in situ" and to attach it to a pre-prepared container.

Figure 10 shows the container of figure 6 but provided with a waste chamber 13 attached to the inlet 9, which in this case actually acts as an evacuation outlet for waste products. The waste chamber 13 comprises one or several vents 14, using for example hydrophobic membranes for easy air exit but liquid confinement. A vent 15 can also be provided in the outlet 2.

Figure 11 shows a tortuous, serpentine-like, reaction chamber 20 arranged between two containers, attached to the respective outlets 2 thereof. The represented containers are those of figures 6 and 10 but they can be of any of the types described above; the reaction chamber between these two containers can also be of any of the types described above.

The reaction chamber 20 can be formed by sandwiching two polymeric slabs. Bonding is performed by means well known in the art, including glue-enabled adhesion and ultrasonic bonding. Room temperature bonding is preferred to avoid degradation of substrate-attached molecules.

Prior to bonding, one of the substrates is spotted with analyte or analytes 25. Homogeneity of the spotting is crucial to achieve a low coefficient of variation. In one embodiment of the invention, a frame with multiple through holes is overlayed on the substrate and the wells formed in this way are filled with coating solution. Both manual and automated pipetting are viable with this system.

After incubation the wells are washed and dried, the frame is removed and the chamber is assembled, bonded and connected to the reagent containers.

The serpentine-like distribution of spots on the reaction chamber substrate is preferred because such geometry results in a compact arrangement of spots which facilitates imaging on a CCD, CMOS or any similar sensor. The channeling of reagents over the spotted regions minimizes the volume of reagent and sample. The tortuous geometry of the reaction chamber allows a long narrow chamber to be compact. But a straight linear distribution of spots is also possible and included in the present invention.

Because enzyme activity depends strongly on temperature, one or more temperature sensors are preferably used to measure changes of temperature over time during the immunoassay. Such sensors can be included in the reaction chamber or can be part of a base plate on which the reaction chamber is positioned throughout the experiment. The sensors can be of the thermocouple type, thermistors or equivalent elements.

Plastic injection, for example using polypropylene or other polymers, can be used to produce the tubular body of the container. Elastomeric polymers can be used for the production of partitions.

The liquid reagents can be introduced in the device sequentially or in parallel.

In the sequential mode, a partition is first pushed in the container beyond a single vent orifice. The reagent is introduced to the level of the vent and a second partition is pushed in. The vent evacuates air and excess reagent. The two partitions and the reagent are then pushed in further and the second liquid reagent is added. The process continues until all reagents have been introduced into the container.

Alternatively, multiple lateral orifices can be used to fill all compartments simultaneously after displacement of the partitions to their final positions. The reagents are injected through lateral orifices which are sealed after filling up. In this case each compartment can include two orifices for convenient filling; one can be used for reagent injection into the compartment while the other can be used for venting.

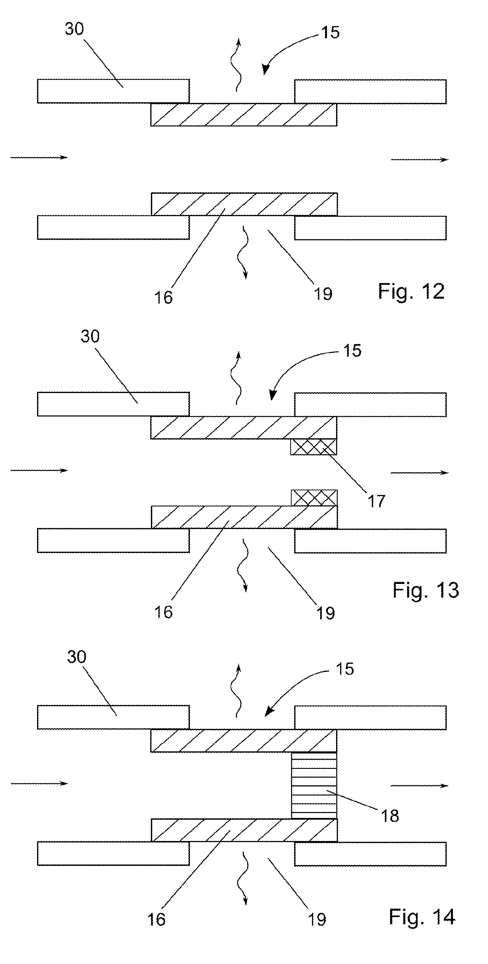

Figures 12 to 14 show three embodiments of a degassing vent (references 15 in figures 10 and 11) included in a duct 30 connecting for example the outlet 2 to the reaction chamber 20. Air bubbles left-over in the container during reagent loading could interfere with the delivery of the reagents to the reaction chamber. Said vent 15 comprises at least one orifice 19 made through at least a wall of the duct 30.

In figure 12, a hydrophobic porous material, such as PTFE or other, is shaped in a cylindrical fashion and used as an adaptor 16 placed under the orifice 19 connecting the outlet of the reagent container and the inlet of the reaction chamber. As liquid flows along the adaptor 16, air encounters less resistance to flow laterally out of the adaptor than axially along it and the liquid is in this way degassed.

In figure 13, the degassing vent 15 has an inlet orifice of larger diameter than the outlet in order to build up sufficient pressure within the adaptor 16 to facilitate lateral degassing through the membrane of the adaptor. To this end a constriction 17 can be attached to the outlet end of the adaptor 16.

In figure 14, the outlet of the adaptor includes a hydrophilic membrane 18 that stops axial air flow at the exit of the adaptor and facilitates lateral degassing through the hydrophobic membrane.

Although only particular embodiments of the invention have been shown and described in the present specification, the person skilled in the art will be able to introduce modifications and substitute any technical features thereof with others that are technically equivalent, depending on the particular requirements of each case, without departing from the scope of protection defined by the appended claims.

For example, the tubular body can have any suitable cross-section and can be curvilinear. The compartments for the liquid reagents in said body can also have different volumes.

## Claims

1. Container for liquid reagents comprising:
- a tubular body (1);
- an actuator (3) for increasing pressure inside said tubular body and acting through a first end thereof;
- an outlet (2) provided in the tubular body at a certain longitudinal position relative to said first end;
**characterized in that** the container further comprises:
- a plurality of partitions (4, 5, 6) located between the first end and said outlet, slidably arranged within the tubular body and sealingly engaged to the inner walls thereof;
- a first compartment defined between two of said partitions and filled with a liquid reagent;
- a second compartment defined either between two partitions or between a partition and the actuator, and filled with a liquid reagent;
so that, upon an actuation of the actuator, the first compartment and the liquid therein are moved inside the tubular body towards the outlet and the first compartment can reach a longitudinal position in which it comprises said outlet, whereby the liquid in the first compartment can be released through the outlet, and subsequently, upon a further actuation of the actuator, the second compartment can also come to comprise said outlet, whereby the liquid in the second compartment can also be released through the outlet.

2. Container according to claim 1, comprising:
- an inlet (9) provided on the tubular body (1) at the same longitudinal region than the outlet (2);
- an additional partition (10) slidably arranged within the tubular body and sealingly engaged to the inner walls thereof, defining an additional compartment (11) between any other partition and itself, said additional compartment having no liquid reagent therein before the actuation of the actuator (3);
so that the additional compartment can eventually reach a longitudinal position in which it comes to comprise both said inlet and said outlet, whereby an additional liquid reagent can be injected into the additional compartment through the inlet and then ejected through the outlet, either before or after the release of any other liquid reagent, depending on the longitudinal position of the additional partition.

3. Container according to claim 1 or 2, comprising an additional actuator acting through a second end of the tubular body (1).

4. Container according to claim 1, comprising a hole on the tubular body (1) and a piece of a substrate (8) provided with an analyte on a surface thereof, such that said piece of substrate is sealingly engaged to said hole with said surface becoming an inner surface of the tubular body, whereby at least two of said compartments (7) defined in the tubular body can act as a reaction chamber when they reach and come to comprise said piece of substrate.

5. Container according to any of the preceding claims, comprising a duct (30) extending from the outlet (2) of the container and a vent (15) provided on such duct, said vent comprising at least one orifice (19) provided on the duct and a hydrophobic sleeve (16) arranged in the duct covering said at least one orifice.

6. Container according to claim 5, wherein the downstream end of the hydrophobic sleeve (16) is narrower than its upstream end, the latter being nearer the outlet (2) of the container.

7. Container according to claim 5, wherein the downstream end of the hydrophobic sleeve (16) is covered with a hydrophilic membrane (18).

8. Container for liquid reagents comprising a tubular body (1) and an actuator (3) for increasing pressure inside said tubular body, said actuator acting through a first end of the tubular body, **characterized in that** the container further comprises:
- a plurality of partitions located between the first end and a second end of the tubular body, slidably arranged within the tubular body and sealingly engaged to the inner walls thereof;
- a first compartment defined between two of said partitions and filled with a first liquid reagent;
- a second compartment defined either between two partitions or between a partition and the actuator, and filled with a second liquid reagent;
- a hole provided on he tubular body;
- a piece of a substrate (8) provided with an analyte on a surface thereof and being sealingly engaged to said hole with said surface becoming an inner surface of the tubular body;
so that, upon an actuation of the actuator, the first compartment and the first liquid reagent are moved inside the tubular body towards the second end thereof and the first compartment can reach a longitudinal position in which it comprises said piece of substrate, whereby the first compartment can act as a reaction chamber, and subsequently, upon a further actuation of the actuator, the second compartment can also come to comprise said piece of substrate, whereby the second compartment can also act as a reaction chamber.

9. Device comprising a container according to any of claims 5 to 7, and a reaction chamber (20) connected to said container through said duct (30).

10. Device according to claim 9, comprising a waste chamber (13) for receiving excess liquid reagent, the waste chamber comprising at least a vent (14) for evacuating air.

11. Apparatus comprising a container according to any of claims 1 to 7 and a linear or curvilinear reaction chamber (20).

12. Apparatus according to claim 11, comprising a further container according to any of claims 1 to 7 and a passageway between the outlet of one container and the outlet of another container, such that the reaction chamber (20) is interposed in said passageway between said two outlets.

13. Apparatus according to claim 11 or 12, wherein said reaction chamber (20) has a serpentine configuration, and spots (20) of an analyte are linearly and sequentially distributed in the serpentine reaction chamber.

14. Apparatus according to any of claims 11 to 13, comprising an optical device for imaging the interior of the reaction chamber (20) or an electrical sensor for electrochemical detection in the reaction chamber.

15. Method of manufacturing an apparatus according to any of claims 11 to 14, comprising the step of spotting a substrate with an analyte by overlaying a frame provided with a plurality of holes on said substrate and filling, to a certain height, the wells formed by said holes with a solution comprising the analyte.
